(19) **Europäisches Patentamt**

**European Patent Office**

**Office européen des brevets**

(11) **EP 1 004 172 B1**

(12) **EUROPÄISCHE PATENTSCHRIFT**

(45) Veröffentlichungstag und Bekanntmachung des Hinweises auf die Patenterteilung:
**20.03.2002 Patentblatt 2002/12**

(21) Anmeldenummer: **98946246.0**

(22) Anmeldetag: **27.07.1998**

(51) Int Cl.⁷: **H04B 7/005**, H04L 25/02, H04L 25/03

(86) Internationale Anmeldenummer:
**PCT/DE98/02111**

(87) Internationale Veröffentlichungsnummer:
**WO 99/08401 (18.02.1999 Gazette 1999/07)**

(54) **VERFAHREN UND EINRICHTUNG ZUR KANALSCHÄTZUNG**

CHANNEL ESTIMATION METHOD AND DEVICE

PROCEDE ET DISPOSITIF POUR L'ESTIMATION DE CANAUX

(84) Benannte Vertragsstaaten:
**DE FR GB IT**

(30) Priorität: **12.08.1997 DE 19734936**

(43) Veröffentlichungstag der Anmeldung:
**31.05.2000 Patentblatt 2000/22**

(73) Patentinhaber: **SIEMENS AKTIENGESELLSCHAFT**
**80333 München (DE)**

(72) Erfinder:
• **BAHRENBURG, Stefan**
  **D-81477 München (DE)**

• **EUSCHER, Christof**
  **D-46414 Rhede (DE)**
• **WEBER, Tobias**
  **D-67731 Otterbach (DE)**
• **BAIER, Paul, Walter**
  **D-67661 Kaiserslautern (DE)**
• **MAYER, Jürgen**
  **D-67105 Schifferstadt (DE)**
• **SCHLEE, Johannes**
  **D-89134 Blaustein (DE)**
• **STEINER, Bernd**
  **D-64347 Griesheim (DE)**

(56) Entgegenhaltungen:
**DE-A- 4 007 989          FR-A- 2 698 504**
**GB-A- 2 287 620**

**Beschreibung**

Die Erfindung betrifft ein Verfahren und eine Einrichtung zur Kanalschätzung in einem Kommunikationssystem, insbesondere einem Mobilfunknetz.

In Kommunikationssystemen werden Nachrichten (beispielsweise Sprache, Bildinformation oder andere Daten) über Übertragungskanäle übertragen, bei Funk- Kommunikationssystemen erfolgt dies mit Hilfe von elektromagnetischen Wellen über eine Funkschnittstelle. Das Abstrahlen der elektromagnetischen Wellen erfolgt dabei mit Trägerfrequenzen, die in dem für das jeweilige System vorgesehenen Frequenzband liegen. Beim GSM (Global System for Mobile Communication) liegen die Trägerfrequenzen im Bereich von 900 MHz. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen.

Die abgestrahlten elektromagnetischen Wellen werden aufgrund von Verlusten durch Reflexion, Beugung und Abstrahlung infolge der Erdkrümmung und dergleichen gedämpft. Infolgedessen sinkt die Empfangsleistung, die bei der empfangenden Funkstation zur Verfügung steht. Diese Dämpfung ist ortsabhängig und bei sich bewegenden Funkstationen auch zeitabhängig. Bei einer Mehrwegeausbreitung kommen mehrere Signalkomponenten unterschiedlich verzögert bei der empfangenden Funkstation an. Die geschilderten Einflüsse beschreiben den verbindungsindividuellen Übertragungskanal.

Aus DE 195 49 158 ist ein Funk-Kommunikationssystem bekannt, das eine CDMA-Teilnehmerseparierung (CDMA Code Division Multiple Access) nutzt, wobei die Funkschnittstelle zusätzlich eine Zeitmultiplex-Teilnehmerseparierung (TDMA Time Division Multiple Access) aufweist. Empfangsseitig wird ein JD-Verfahren (Joint Detection) angewendet, um unter Kenntnis von CDMA-Codes mehrerer Teilnehmer eine- verbesserte Detektion der übertragenen Daten vorzunehmen. Dabei ist es bekannt, daß einer Verbindung über die Funkschnittstelle zumindest zwei Datenkanäle zugeteilt werden können, wobei jeder Datenkanal durch einen individuellen Spreizcode unterscheidbar ist.

Es ist aus dem GSM-Mobilfunknetz bekannt, daß übertragene Daten als Funkblöcke (Bursts) innerhalb von Zeitschlitzen übertragen werden, wobei innerhalb eines Funkblockes Mittambein mit bekannten Symbolen übertragen werden. Diese Mittambeln können im Sinne von Trainingssequenzen zum empfangsseitigen Abstimmen der Funkstation genutzt werden. Die empfangende Funkstation führt anhand der Mittambeln eine Schätzung der Kanalimpulsantworten für verschiedene Übertragungskanäle durch. Die Länge der Mittambel ist unabhängig von den Verkehrsbedingungen fest definiert.

Aus FR-A-2 698 504 ist der Einsatz einer Fourier-Transformation bei der Kanalschätzung bekannt, wobei die Kanalimpulsantwort aus dem Quotienten der Fouriertransformierten des empfangenen, verzerrten Testpaketes und des im Empfänger gespeicherten, unverzerrten Testpaketes berechnet wird. Aus GB-A-2 287 620 ist ferner bekannt, das eine Testsequenz als Mittambel innerhalb eines Funkblockes übertragen wird.

Werden wie beim TD/CDMA-Übertragungsverfahren gleichzeitig Informationen mehrerer Verbindungen in einem Zeitschlitz übertragen, muß gleichzeitig für unterschiedliche Übertragungskanäle eine Kanalschätzung durchgeführt werden, wobei die Anzahl der Verbindungen und damit der zu schätzenden Kanalimpulsantworten schwankt.

Der Erfindung liegt die Aufgabe zugrunde, ein Verfahren und eine Einrichtung zur Kanalschätzung anzugeben, die trotz wechselnder Anforderungen an die Kanalschätzung eine wirtschaftliche Realisierung ermöglichen. Die Aufgabe wird durch das Verfahren mit den Merkmalen des Patentanspruchs 1 und die Einrichtung mit den Merkmalen des Patentanspruchs 10 gelöst. Vorteilhafte Weiterbildungen der Erfindung sind den Unteransprüchen zu entnehmen.

Erfindungsgemäß werden beim Verfahren zur Kanalschätzung in einem Kommunikationssystem Signale bestehend aus einem Datenteil mit Datensymbolen und einer Mittambel mit $L_M$ bekannten Symbolen über einen Übertragungskanal übertragen. Empfangsseitig werden Kanalkoeffizienten bezüglich einer Kanalimpulsantwort des Übertragungskanals geschätzt, wobei zur Schätzung der Kanalkoeffizienten das von der Mittambel abhängige empfangene Signal mit aus den bekannten Symbolen der Mittambel abgeleiteten Schätzkoeffizienten durch eine Fouriertransformation gefaltet wird. Die Fouriertransformation wird zur Basis zwei mit $2^x \geq 2L$ realisiert.

Die Fouriertransformation zur Basis zwei läßt sich wirtschaftlich in digitalen Signalverarbeitungsmitteln, wie digitalen Signalprozessoren oder ASICs, realisieren. Der Exponent X wird dabei so gewählt, daß $2^X \geq 2L$ ist. Damit ist für alle bei einer Mittambellänge von $L_M$ auftretenden Anforderungen an die Kanalschätzung eine zyklische Faltung ohne Änderung des Algorithmus durchführbar.

Nach einer vorteilhaften Ausprägung der Erfindung wird X derart gewählt, daß $2^{X-1}$ kleiner 2L ist. Damit wird die Fouriertransformation, die vorteilhafterweise als schnelle Fouriertransformation (FFT) ausgebildet ist, nicht überdimensioniert und kann schnellstmöglich die Kanalkoeffizienten der Kanalschätzung liefern.

Weitere Einsparungen werden erreicht, falls die Schätzung der Kanalkoeffizienten für mehrere Verbindungen gemeinsam durchgeführt wird. Damit orientiert sich die Fouriertransformation am Aufwand für die komplette Kanalschätzung der gleichzeitig in einem Frequenzkanal übertragenen Mittambeln.

Um keine Anpassung durchführen zu müssen, werden die Kanalkoeffizienten auch für nicht von Verbindungen genutzte Übertragungskanäle geschätzt. Damit bleibt die Fouriertransformation unbeeinflußt durch eine wechselnde Anzahl von Verbindungen über die Funkschnittstelle.

Nach einer weiteren vorteilhaften Ausgestaltung der Erfindung wird eine Skalierung der geschätzten Kanalkoeffizienten durchgeführt. Da einer Verbindung mehrere Datenkanäle zugeordnet sein können und das Verhältnis der Energien der Datensymbole eines Datenkanals und zugehörigen Kanalkoeffizienten für alle Verbindungen gleich sein soll, schafft eine Skalierung den nötigen Ausgleich. Die Skalierung verbessert die der Kanalschätzung folgende Datenschätzung (Detektion).

Eine Zuordnung von geschätzten Kanalkoeffizienten zu Verbindungen mit einem oder mehreren Datenkanälen und verbindungsindividuellen Mittambeln wird vorteilhafterweise anhand einer Tabelle durchgeführt. In diese Tabelle werden die Konfigurierungsdaten der Funkschnittstelle eingetragen.

Das erfindungsgemäße Verfahren ist auf verschiedenste Übertragungskanäle (drahtgebunden oder nicht drahtgebunden) anwendbar. Besonders vorteilhaft wird die Kanalschätzung verbessert, falls das Kommunikationssystem ein Mobilfunknetz ist und die sich schnell ändernden Übertragungskanäle Funkkanäle einer Funkschnittstelle beschreiben.

Wird die Länge L der auszuwertenden Mittambel im Gegensatz zur Gesamtlänge $L_M$ der Mittambel dynamisch der Anzahl der Verbindungen im Zeitschlitz und an die Länge der zu schätzenden Kanalimpulsantwort angepaßt, so erhöht sich im Mittel die spektrale Effizienz der Funkschnittstelle. Trotzdem bleibt die erfindungsgemäße Kanalschätzung durchführbar, wenn $2^X$ auf das maximal mögliche L eingestellt wird.

Es liegt weiterhin im Rahmen der Erfindung, daß die in einem Zeitschlitz verwendeten Mittambeln von einem gemeinsamen Mittambelgrundcode abgeleitet werden. Damit lassen sich sende- und empfangsseitig die Mittambeln besonders leicht erzeugen und eine Kanalschätzung kann für alle Verbindungen, deren Mittambeln von einem gemeinsamen Mittambelgrundcode abgeleitet wurden, gemeinsam durchgeführt werden.

Es ist vorteilhaft, einer Verbindung mehrere Datenkanäle zuzuordnen, wobei eine Anzahl Mittambeln verwendet wird, die kleiner als die Anzahl von Datenkanälen ist. Damit wird der Aufwand der Kanalschätzung verringert. Zusätzlich wird die Anzahl der möglichen Datenkanäle pro Zeitschlitz erhöht, da mehrere Datenkanäle die gleiche Mittambel benutzen und der kapazitätsbegrenzende Einfluß der Kanalschätzung nicht auf die Datenkanäle wirkt.

Ausführungsbeispiele der Erfindung werden anhand der beiliegenden Zeichnungen näher erläutert.

Dabei zeigen

FIG 1     ein Blockschaltbild eines Mobilfunknetzes,

FIG 2     eine schematische Darstellung der Rahmenstruktur der Funkschnittstelle,

FIG 3     eine schematische Darstellung des Aufbaus eines Funkblocks,

FIG 4     ein Blockschaltbild des Senders einer Funkstation,

FIG 5     ein Blockschaltbild des Empfängers einer Funkstation,

FIG 6     ein Blockschaltbild der digitalen Signalverarbeitungsmittel, und

FIG 7     ein Ablaufdiagramm der Kanalschätzung.

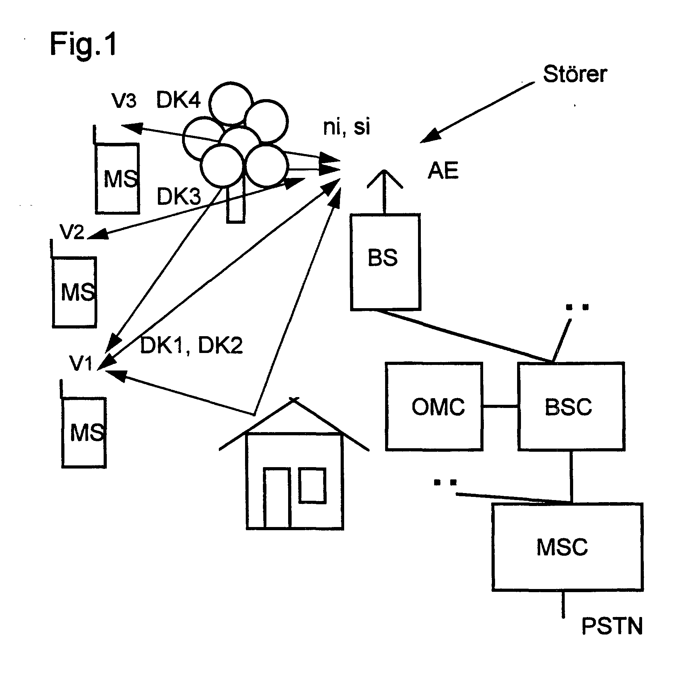

Das in FIG 1 dargestellte Funk-Kommunikationssystem entspricht in seiner Struktur einem bekannten GSM-Mobilfunknetz, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS ist eine Funkstation, die über eine Funkschnittstelle eine Funkverbindung zu Mobilstationen MS aufbauen kann.

In FIG 1 sind beispielhaft drei Funkverbindungen zur Übertragung von Nutzinformationen ni und Signalisierungsinformationen si zwischen drei Mobilstationen MS und einer Basisstation BS dargestellt, wobei einer Mobilstation MS zwei Datenkanäle DK1 und DK2 und den anderen Mobilstationen MS jeweils ein Datenkanal DK3 bzw. DK4 zugeteilt sind. Ein Operations- und Wartungszentrum OMC realisiert Kontroll- und Wartungsfunktionen für das Mobilfunknetz bzw. für Teile davon. Die Funktionalität dieser Struktur wird vom Funk-Kommunmikationssystem nach der Erfindung genutzt; sie ist jedoch auch auf andere Funk-Kommunikationssysteme übertragbar, in denen die Erfindung zum Einsatz kommen kann.

Die Basisstation BS ist mit einer Antenneneinrichtung verbunden, die z.B. aus drei Einzelstrahlern besteht. Jeder der Einzelstrahler strahlt gerichtet in einen Sektor der durch die Basisstation BS versorgten Funkzelle. Es können jedoch alternativ auch eine größere Anzahl von Einzelstahlern (gemäß adaptiver Antennen) eingesetzt werden, so daß auch eine räumliche Teilnehmerseparierung nach einem SDMA-Verfahren (Space Division Multiple Access) eingesetzt werden kann.

Die Basisstation BS stellt den Mobilstationen MS Organisationsinformationen über den Aufenthaltsbereich (LA location area) und über die Funkzelle (Funkzellenkennzeichen) zur Verfügung. Die Organisationsinformationen werden gleichzeitig über alle Einzelstahler der Antenneneinrichtung abgestrahlt.

Die Verbindungen mit den Nutzinformationen ni und Signalisierungsinformationen si zwischen der Basisstation BS und den Mobilstationen MS unterliegen einer Mehrwegeausbreitung, die durch Reflektionen beispielsweise an Gebäuden zusätzlich zum direkten Ausbreitungsweg hervorgerufen werden. Durch eine gerichtete Abstahlung durch bestimmte Einzelstrahler der Antenneneinrichtung AE ergibt sich im Vergleich zur omnidirektionalen Abstahlung ein größerer Antennengewinn. Die Qualität der Verbindungen wird durch die gerichtete Abstrahlung verbessert.

Geht man von einer Bewegung der Mobilstationen MS aus, dann führt die Mehrwegeausbreitung zusammen mit weiteren Störungen dazu, daß bei der empfangenden Mobilstation MS sich die Signalkomponenten der verschiedenen Ausbreitungswege eines Teilnehmersignals zeitabhängig überlagern. Weiterhin wird davon ausgegangen, daß sich die Teilnehmersignale verschiedener Basisstationen BS am Empfangsort zu einem Empfangssignal rx in einem Frequenzkanal überlagern. Aufgabe einer empfangenden Mobilstation MS ist es, in den Teilnehmersignalen übertragene Datensymbole d der Nutzinformationen ni, Signalisierungsinformationen si und Daten der Organisationsinformationen zu detektieren.

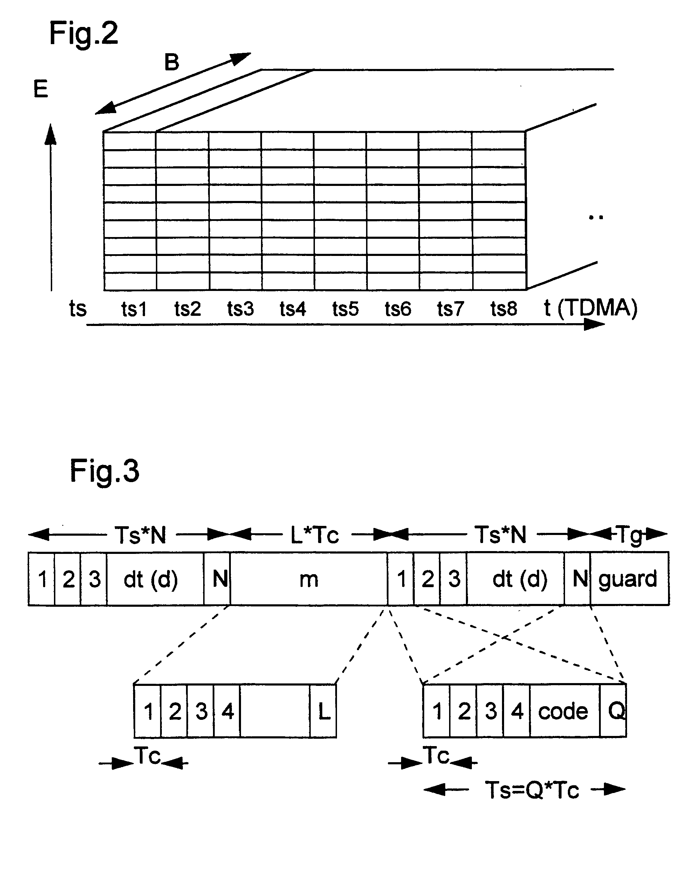

Die Rahmenstruktur der Funkschnittstelle ist aus FIG 2 ersichtlich. Gemäß einer TDMA-Komponente ist eine Aufteilung eines breitbandigen Frequenzbereiches, beispielsweise der Bandbreite B = 1,6 MHz, in mehrere Zeitschlitze ts, beispielsweise 8 Zeitschlitze ts1 bis ts8 vorgesehen. Jeder Zeitschlitz ts innerhalb des Frequenzbereiches B bildet einen Frequenzkanal. Innerhalb der Frequenzkanäle, die zur Nutzdatenübertragung vorgesehen sind, werden Informationen mehrerer Verbindungen in Funkblöcken übertragen. Gemäß einer FDMA (Frequency Division Multiple Access)-Komponente sind dem Funk-Kommunikationssystem mehrere Frequenzbereiche B zugeordnet.

Gemäß FIG 3 bestehen diese Funkblöcke zur Nutzdatenübertragung aus Datenteilen dt mit Datensymbolen d, in denen Abschnitte mit empfangsseitig bekannten Mittambeln m eingebettet sind. Die Daten d sind verbindungsindividuell mit einer Feinstruktur, einem Speizcode (CDMA-Code), gespreizt, so daß empfangsseitig beispielsweise K Datenkanäle DK1, DK2, DK3,.. DKK durch diese CDMA-Komponente separierbar sind. Jedem dieser Datenkanäle DK1, DK2, DK3,.. DKK wird sendeseitig pro Symbol eine bestimmte Energie E zugeordnet.

Die Spreizung von einzelnen Symbolen der Daten d mit Q Chips bewirkt, daß innerhalb der Symboldauer Ts Q Subabschnitte der Dauer Tc übertragen werden. Die Q Chips bilden dabei den individuellen CDMA-Code. Die Mittambel m besteht aus L Chips, ebenfalls der Dauer Tc. Weiterhin ist innerhalb des Zeitschlitzes ts eine Schutzzeit guard der Dauer Tg zur Kompensation unterschiedlicher Signalaufzeiten der Verbindungen aufeinanderfolgender Zeitschlitze ts vorgesehen.

Innerhalb eines breitbandigen Frequenzbereiches B werden die aufeinanderfolgenden Zeitschlitze ts nach einer Rahmenstruktur gegliedert. So werden acht Zeitschlitze ts zu einem Rahmen zusammengefaßt, wobei ein bestimmter Zeitschlitz des Rahmens einen Frequenzkanal zur Nutzdatenübertragung bildet und wiederkehrend von einer Gruppe von Verbindungen genutzt wird. Weitere Frequenzkanäle, beispielsweise zur Frequenz- oder Zeitsynchronisation der Mobilstationen MS werden nicht in jedem Rahmen, jedoch zu vorgegebenen Zeitpunkten innerhalb eines Multirahmens eingeführt. Die Abstände zwischen diesen Frequenzkanälen bestimmen die Kapazität, die das Funk-Kommunikationssystem dafür zur Verfügung stellt.

Die Parameter der Funkschnittstelle sind z.B. wie folgt:

| Dauer eines Funkblocks | 577 µs |
|---|---|
| Anzahl Chips pro Mittambel m | 243 |
| Schutzzeit Tg | 32 µs |
| Datensymbole pro Datenteil N | 33 |
| Symboldauer Ts | 6,46 µs |
| Chips pro Symbol Q | 14 |
| Chipdauer Tc | 6/13 µs |

In Aufwärts- (MS -> BS) und Abwärtsrichtung (BS → MS) können die Parameter auch unterschiedlich eingestellt werden.

Wird die Mittambellänge dynamisch der Anzahl M der Verbindungen im Zeitschlitz und an die Länge W der zu schätzenden Kanalimpulsantwort angepaßt, so erhöht sich im Mittel die spektrale Effizienz der Funkschnittstelle. Dabei ist zu berücksichtigen, daß pro Zeitschlitz ts nur eine begrenzte Anzahl von Kanalimpulsantworten gemeinsam schätzbar ist. Diese Limitierung ergibt sich daraus, daß die Mittambeln L auswertbare Chips enthalten, die Kanalimpulsantworten zur genauen Kanalschätzung W Koeffizienten aufweisen und M die Anzahl der Verbindungen pro Zeitschlitz darstellt. Die Anzahl gemeinsam schätzbarer Kanalimpulsarten h ist dabei durch die Ungleichung L ≥ M * W + W - 1 begrenzt.

Durch die Nutzung einer gemeinsamen Mittambel m für mehrere Datenkanäle DK1 und DK2 einer Verbindung V1, V2, V3 ist es möglich, in einem Zeitschlitz ts eine größere Anzahl von Datenkanälen DK1 und DK2 zu übertragen. Dies führt zu einer Erhöhung der Datenrate pro Zeitschlitz ts oder zu einer Verlängerung der schätzbaren Kanalimpulsantworten (z. B. für komplizierte Geländestrukturen) in diesem Zeitschlitz ts.

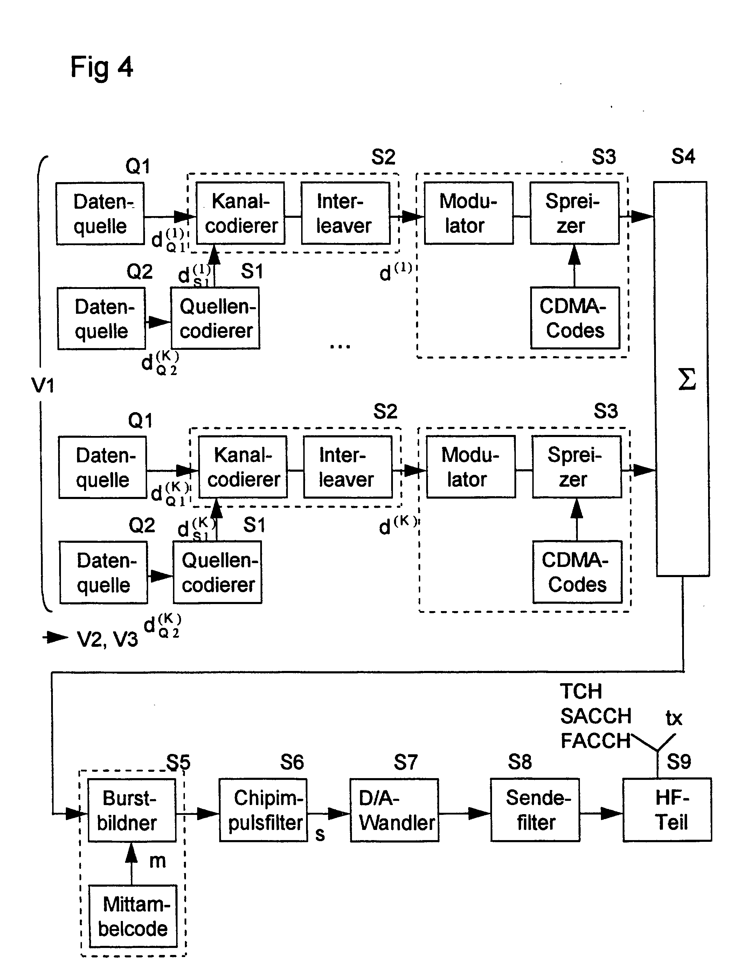

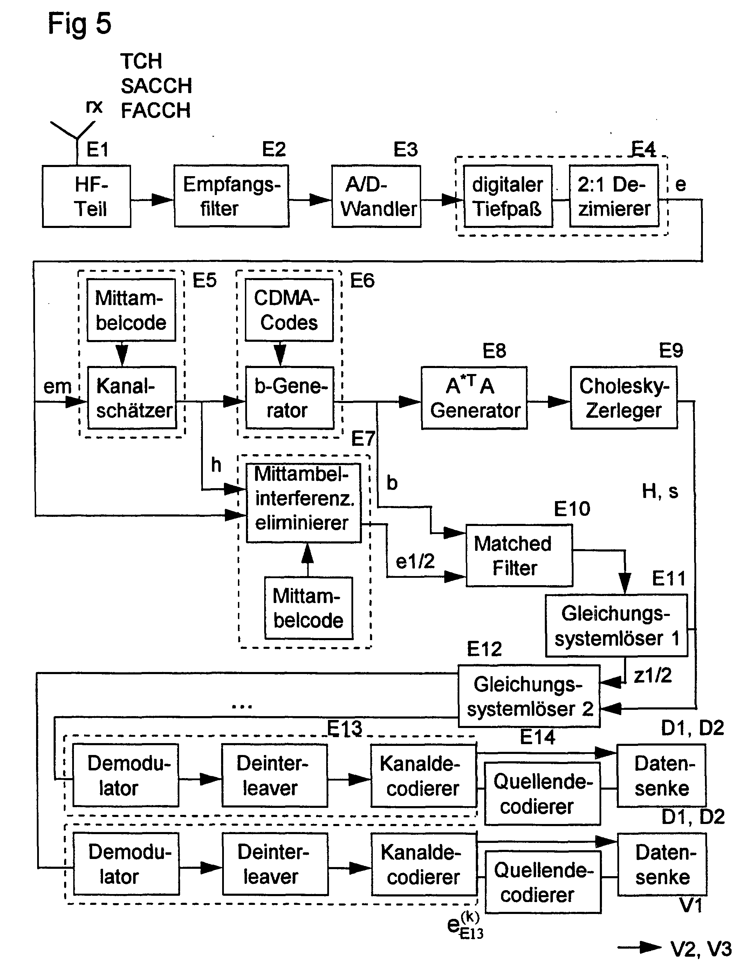

Die Sende- bzw. Empfänger nach FIG 4 bzw. FIG 5 beziehen sich auf Funkstationen, die sowohl eine Basisstation BS oder eine Mobilstation MS sein können. In einem Empfänger wird die erfindungsgemäße Einrichtung zur Kanalschätzung eingesetzt. Es wird in FIG 4 und 5 jedoch nur die Signalverarbeitung für eine Verbindung V1 gezeigt.

In FIG 4 ist der Sendepfad der Einrichtung detailliert dargestellt. Er ist in der üblichen Beschreibungsform zur Modellierung und Simulation eines nachrichtentechnischen Systems dargestellt, bei dem die Abhängigkeit zwischen verschiedenen Funktionen und die Systemstruktur dargestellt ist.

Im Teilmodul S2 werden die Eingangsdaten $d_{S1}^{(k)}$, k=1..K, die wahlweise aus den uncodierten Daten $d_{Q1}^{(k)}$, k=1..K, oder.aus den im Teilmodul S1 quellencodierten Daten $d_{Q2}^{(k)}$, k=1..K, hervorgehen, der Kanalcodierung mit anschließenden Interleaving unterzogen. Die Daten von einer ersten Datenquelle Q1 werden über einen Nutzdatenkanal TCH übertragen, die Daten von einer zweiten Datenquelle Q2 über einen Signalisierungskanal SACCH bzw. FACCH.

Eine 4-PSK Modulation und eine Spreizung der Daten mit den modulierten teilnehmerspezifischen CDMA-Codes $c^{(k)}$, k=1..K, erfolgt im Teilmodul S3. Danach folgt die Summation aller gespreizten Datenfolgen im Teilmodul S4 und ein anschliessendes Integrieren der Mittambel m in die Burststruktur im Teilmodul S5. Im Teilmodul S6 folgt die spektrale Formung des Sendesignals s; in den Modulen S7 bis S9 die Umsetzung des zeitdiskreten 4-fach überabgetasteten Sendesignals im Basisband s in den zeit- und wertekontinuierlichen Bandpaßbereich des Sendefrequenzbandes.

Nach einer funktionellen Beschreibung des Senders nimmt dieser die zuvor digitalisierten Datensymbole d einer Datenquelle (Mikrofon oder netzseitige Verbindung) auf, wobei die beiden Datenteile mit je N=33 Datensymbolen d getrennt verarbeitet werden. Es findet zuerst eine Kanalcodierung der Rate 1/2 und constraint length 5 im einem Faltungscodierer statt, worauf sich eine Verwürfelung im Interleaver mit einer Verwürfelungstiefe von 4 oder 16 anschließt.

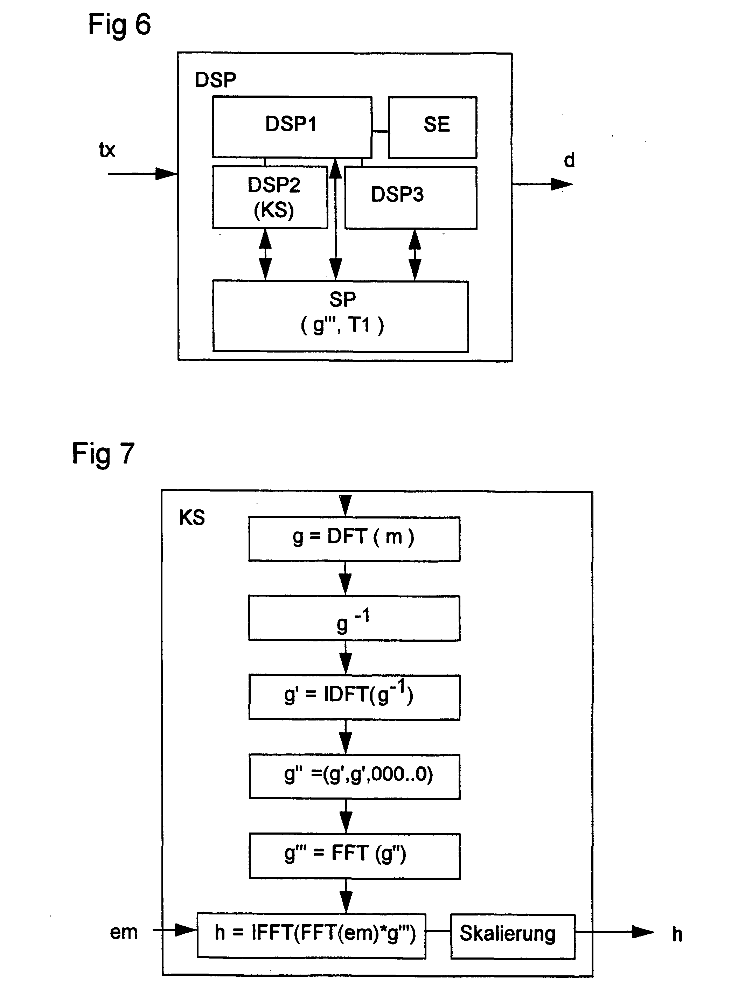

Die verwürfelten Daten werden anschließend in einem Modulator 4-PSK moduliert, in 4-PSK Symbole umgewandelt und daraufhin in Spreizmitteln entsprechend individueller CDMA-Codes gespreizt. Diese Verarbeitung wird in einem Signalverarbeitungsmittel DSP parallel für alle Datenkanäle DK1, DK2 einer Verbindung V1 durchgeführt. Im Fall einer Basisstation BS werden die übrigen Verbindungen V2, V3 ebenfalls parallel verarbeitet. Das digitalen Signalverarbeitungsmittel DSP kann durch digitale Signalprozessoren DSP1, DSP2, DSP3, die gemäß FIG 6 durch eine Steuereinrichtung SE gesteuert werden, realisiert werden.

In einem Summierglied werden die gespreizten Daten der Datenkanäle DK1 und DK2 überlagert, wobei bei dieser Überlagerung die Datenkanäle DK1 und DK2 gleich gewichtet werden. Die zeitdiskrete Darstellung des Sendesignals für den m-ten Teilnehmer kann nach folgender Gleichung erfolgen:

$$s_{q+(n-1)Q}^{(m)} = \sum_{k=1}^{K(m)} d_n^{(k,m)} c_q^{(k,m)}, \text{mit} \qquad q = 1..Q, n = 1..N$$

Wobei K(m) die Nummer der Datenkanäle des m-ten Teilnehmers und N die Anzahl der Datensymbole d pro Datenteil dt ist. Das überlagerte Teilnehmersignal wird einem Funkblockbildner (Burstbildner) zugeführt, der unter der Berücksichtigung der verbindungsindivuellen Mittambeln m den Funkblock zusammenstellt.

Da komplexe CDMA-Codes verwendet werden, die von binären CDMA-Codes durch eine Multiplikation mit $j^{q-1}$ abgeleitet werden, ist das Ausgangssignal eines Chipimpulsfilters, das sich an den Funkblockbildner anschließt GMSK moduliert und hat eine in etwa konstante Einhüllende falls die Verbindung nur einen Datenkanal nutzt. Das Chipimpulsfilter führt eine Faltung mit einem GMSK-Hauptimpuls durch.

Anschließend an die digitale Signalverarbeitung wird sendeseitig eine Digital/Analog-Wandlung, eine Übertragung ins Sendefrequenzband und eine Verstärkung des Signals durchgeführt. Daraufhin wird das Sendesignal tx über die Antenneneinrichtung abgestrahlt und erreicht ggf. über verschiedene Übertragungskanäle die empfangende Funkstation, beispielsweise eine Mobilstation MS.

Pro Verbindung wird dabei eine individuelle Mittambel m bestehend aus L komplexen Chips genutzt. Die notwendigen M unterschiedlichen Mittambeln werden von einem Grundmittambelcode der Länge M * W abgeleitet, wobei M die maximale Anzahl von Teilnehmern (Verbindungen) und W die erwartete maximale Anzahl von Kanalkoeffizienten h der Kanalimpulsantwort darstellt. Die verbindungsindividuelle Mittambel m wird durch eine Rotation nach rechts des Grundmittambelcodes um W * m Chips und periodischer Dehnung bis $L \geq (M + 1)$* W - Chips abgeleitet. Da der komplexe Grundmittambelcode von einem binären Mittambelcode durch Modulation mit $j^{q-1}$ abgeleitet wird, ist das Sendesignal der Mittambel m ebenfalls GMSK moduliert.

In FIG 5 ist der Empfangspfad der Einrichtung detailliert dargestellt. Im Teilmodul E1 erfolgt die Umsetzung der Empfangssignale rx aus dem Sendefrequenzband in den Tiefpaßbereich und die Aufspaltung in eine reale und eine imaginäre Komponente. Im Teilmodul E2 erfolgt eine analoge Tiefpaßfilterung und im Teilmodul E3 schließlich eine 2-fache Überabtastung des Empfangssignals mit 13/3 MHz und einer Wortbreite von 12 bit.

Im Teilmodul E4 erfolgt eine digitale Tiefpaßfilterung mit einem Filter der Bandbreite 13/6 MHz mit möglichst hoher Flankensteilheit zur Kanaltrennung. Anschließend erfolgt im Teilmodul E4 eine 2:1 Dezimierung des 2-fach überabgetasteten Signals.

Das derart gewonnene Empfangssignal e besteht im wesentlichen aus zwei Teilen, nämlich aus einem Anteil em zur Kanalschätzung und aus den Anteilen e1 und e2 zur Datenschätzung. Im Teilmodul E5 erfolgt die Schätzung aller Kanalimpulsantworten $h^{(k)}$ mittels eines bekannten Mittambelgrundcodes m aller im jeweiligen Zeitschlitz übertragener Datenkanäle.

Im Teilmodul E6 werden Parameter $b^{(k)}$ für angepaßte Filter für jeden Datenkanal unter Verwendung der CDMA-Codes $c^{(k)}$ bestimmt. Im Teilmodul E7 erfolgt die Eliminierung der von den Mittambeln $m^{(k)}$ herrührenden Interferenzen in den zur Datenschätzung benutzten Empfangsblöcken e1/2. Dies ist durch die Kenntnis von $h^{(k)}$ und $m^{(k)}$ möglich.

Im Teilmodul E8 efolgt die Berechnung der Kreuzkorrelationsmatrix $A^{*T} A$. Da $A^{*T} A$ Töplitzstruktur hat, ist hier nur die Berechnung eines kleines Teils der Matrix nötig, der dann zur Erweiterung auf die komplette Größe verwendet werden kann. Im Teilmodul E9 erfolgt eine Cholesky-Zerlegung von $A^{*T} A$ in $H^{*T} H$, wobei H eine obere Dreiecksmatrix ist. Aufgrund der Töplitzstruktur von $A^{*T} A$ hat auch H näherungsweise eine Töplitzstuktur und muß nicht vollständig berechnet werden. Ein Vektor s repräsentiert die Kehrwerte der Diagonalelemente von H, die vorteilhaft bei den Gleichungssystemlösern benutzt werden können.

Im Teilmodul E10 erfolgt eine angepaßte Filterung (matched filter) der Empfangssymbolfolgen e1/2 mit $b^{(k)}$. Teilmodul E11 realisiert die Gleichungssystemlöser 1 für $H^{*T} *z1/2=e1/2$, und Teilmodul E12 die Gleichungssystemlöser 2 für $H^* d1/2=z1/2$. Im Teilmodul E13 werden die geschätzten Daten d1/2 demoduliert, entwürfelt und schließlich mittels Viterbi-Decodierer faltungsdecodiert. Die decodierten Datenblöcke $e_{E13}^{(k)}$ werden wahlweise einer ersten Datensenke D1 oder über den Quellendecodierer E14 einer zweiten Datensenke D2 zugeführt. Die Quellendecodierung ist bei Datenblöcken notwendig, die über Signalisierungskanäle SACCH oder FACCH übertragen wurden.

Empfangsseitig (siehe FIG 5) findet nach einer analogen Verarbeitung, d.h. Verstärkung, Filterung, Konvertierung ins Basisband im HF-Teil, eine digitale Tiefpaßfilterung der Empfangssignale rx in einen digitalen Tiefpaßfilter statt. Ein Teil des digitalisierten Empfangssignals e, der durch einen Vektor em der Länge L = M * W repräsentiert wird und keine Interferenzen des Datenteils dt enthält, wird einem Kanalschätzer übermittelt. Die gemeinsame Kanalschätzung aller M Kanalimpulsantworten wird in FIG 7 näher erläutert.

Die Datenschätzung im Joint Detection Datenschätzer wird für alle Verbindungen gemeinsam durchgeführt. Die CDMA-Codes werden durch $c^{(k)}$, die Empfangsdaten mit $d^{(k)}$ und die korrespondierenden Kanalimpulsantworten mit $h^{(k)}$ repräsentiert, wobei k = 1 bis K ist.

Der Teil des Empfangssignals der für die Datenschätzung benutzt wird, wird durch den Vektor

$$e = A \cdot d + n$$

beschrieben, wobei A die Systemmatrix mit den a-priori bekannten CDMA-Codes $c^{(k)}$ und den geschätzten Kanalimpulsantworten $h^{(k)}$ ist. Der Vektor d ist eine Kombination der Daten $d^{(k)}$ jedes Datenkanals gemäß folgender Gleichung:

$$d = [\, d_1^{(1)}, d_1^{(2)}, .. d_1^{(K)} .. d_N^{(1)} .. d_N^{(K)} \,]$$

Für diese Symbolanordnung hat die Systemmatrix A eine Bandstruktur, die zur Reduzierung der Komplexität des Algorithmus genutzt wird. Der Vektor n enthält den Rauschanteil. Die Datenschätzung wird durch einen Zero Forcing Block Linear Equalizer (ZF-BLE) nach folgender Gleichung durchgeführt:

$$d = (A^{*T}A)^{-1}A^{*T}e.$$

Die Komponenten haben kontinuierliche Werte und sind nicht manipulierte Schätzwerte der Datensymbole d. Um die Berechnung von d zu vereinfachen, kann das Problem in ein lineares Gleichungssystem der Form

$$(A^{*T}A)d = A^{*T}e$$

umgeschrieben werden, wobei nach einer Cholesky-Zerlegung

$$A^{*T}A = H^{*T}H$$

die Bestimmung der Datensymbole d auf das Lösen folgender zwei Systeme linearer Gleichungen

$$H^{*T}z = A^{*T}e \qquad \text{mit} \qquad H \cdot d = z$$

reduziert wird. Die Lösung dieser Gleichungssysteme kann rekursiv durchgeführt werden. H ist eine obere Dreiecksmatrix und $H^{*T}$ ist eine untere Dreiecksmatrix.

In FIG 6 ist ein digitales Signalverarbeitungsmittel DSP gezeigt, das empfangsseitig bereits digitalisierte Empfangssignale rx aufnimmt und die geschätzten Datensymbole d abgibt. Das digitale Signalverarbeitungsmittel DSP enthält mehrere digitale Signalprozessoren DSP1, DSP2, DSP3, einen Speicher SP und eine Steuereinrichtung SE.

Im Speicher SP sind die Tabelle T1 und später erklärte Schätzkoeffizienten g''' für die Kanalschätzung gespeichert. Einer der digitalen Signalprozessoren DSP2 realisiert mit entsprechenden Programmodulen einen Kanalschätzer KS.

Der Kanalschätzer KS dient zur Schätzung der Übertragungskanäle mit Kanalkoeffizienten h der Länge W aller K Teilnehmer aus der nur von der Mittambel abhängigen Empfangsfolge em der Länge $L \geq L_M - W + 1$, wobei bei $L_M = 243$ und $W = 27$ die Länge gleich 217 ist. L ist die Länge des auszuwertenden Teils des von den Mittambeln m abhängigen Empfangssignals em. Ist $L = L_M - W + 1$, so wird die Energie der Mittambel m optimal ausgenutzt. Im Beispiels ist die ausgenutzt Länge gleich M = 8 * 27, also 216. Die Kanalschätzung mittels inverser Filterung nutzt die Kenntnis über die von einer Mobilstation MS verwendeten Mittambel $m^{(M)}$, die aus einem zyklischen Mittambelgrundcode $m^W$ hervorgeht. Der verwendete zyklische Mittambelgrundcode der Länge L ist abhängig von der Anzahl W der zu schätzenden Kanalkoeffizienten h.

Nutzt eine Mobilstation MS innerhalb einer Verbindung V1 mehrere Datenkanäle DK1, DK2, ..., so ist die geschätzte Kanalimpulsantwort einer normierten Leistung auf die Datenkanäle DK1, DK2, ..., leistungsmäßig zu gleichen Teilen zuzuordnen, d.h. die zugeordneten Kanalimpulsantworten haben jeweils die normierte Leistung 1. Dies erfolgt durch eine Skalierung mit von der Gesamtleistung der Kanalimpulsantwort abhängigen Skalierungsfaktoren.

Nach FIG 7 erfolgt zur Vorbereitung der Kanalschätzung eine diskrete Fouriertransformation DFT des zyklischen Grundmittambelcodes $m^W$ zu einem ersten Zwischenergebnis g und anschließend das Bilden einer Inversen $g^{-1}$ des ersten Zwischenergebnisses g. Die Inverse g wird einer inversen diskreten Fouriertransformation IDFT unterzogen und ein zweites Zwischenergebnis g' gebildet. Daraufhin wird ein drittes Zwischenergebnis g'' durch zweifaches Aneinanderhängen des zweiten Zwischenergebnisses g' und Auffüllen des Vektors mit Werten "Null" erzeugt. Der Länge des Vektors entspricht dann $2^X$, wobei gilt:

$$2^X \geq 2L.$$

Daraufhin wird ein viertes Zwischenergebnis g''', das die Schätzkoeffizienten bildet, durch schnelle Fouriertransformation FFT aus dem dritten Zwischenergebnis g'' gebildet. Das vierte Zwischenergebnis g''' wird im Speicher SP gespeichert.

Wird nun der von den Mittambeln m abhängige Teil em des Empfangssignals ausgewertet, so findet eine Auswertung nach folgender Gleichung statt:

$$h = IFFT ( FFT (em) * g''').$$

Der Vektor h enthält dabei die Kanalkoeffizienten h, beispielweise mit W=27, der Kanalimpulsantworten aller K Verbindungen V1, V2, V3, .. VK.

$$h = (\, h_0^{V1} \,, h_1^{V1} \,, .. h_{26}^{V1} \,, h_0^{V2} \,, .. h_{26}^{V2} \,, .. h_{26}^{VK} \,),$$

wobei die Auflösung eines Koeffizienten 16 bit beträgt. Diesem Vektor können daraufhin zur Datendetektion die Kanalimpulsantworten mit Kanalkoeffizienten h entnommen werden.

Die Datenschätzung ist für einen einzelnen Datenteil dt gültig. Weiterhin müssen bei der Datenschätzung die Interferenzen zwischen dem von den Mittambeln $m^{(m)}$ abhängigen Teil em des Empfangssignals und den Datenteilen dt berücksichtigt werden. Nach der Trennung der Datensymbole d der Datenkanäle DK1 und DK2 findet eine Demodulation in einem Demodulator, eine Entwürfelung in einem Deinterleaver und eine Kanaldecodierung im Faltungsdecodierer statt.

Sendeseitig und empfangsseitig wird die digitale Signalverarbeitung durch eine Steuereinrichtung SE gesteuert. Die Steuereinrichtung SE berücksichtigt insbesondere die Anzahl der Datenkanäle DK1, DK2 pro Verbindung, die CDMA-Codes der Datenkanäle DK1, DK2, die aktuelle Funkblockstruktur und die Anforderungen an die Kanalschätzung.

Insbesondere wird durch die Steuereinrichtung SE eine Tabelle T1 beschrieben und ausgelesen, in der die aktuellen Verbindungen V1, V2, V3 der Funkschnittstelle und die den Verbindungen V1, V2, V3 zugeordneten Mittambelcodes $m^{(m)}$ sowie die Datenkanäle DK1, DK2, DK3 und ihre CDMA-Codes gespeichert sind.

Das in den Ausführungsbeispielen vorgestellte Mobilfunknetz mit einer Kombination von FDMA, TDMA und CDMA ist für Anforderungen an Systeme der 3. Generation geeignet. Insbesondere eignet es sich für eine Implementierung in bestehende GSM-Mobilfunknetze, für die ein nur geringer Änderungsaufwand nötig ist.

**Patentansprüche**

1.  Verfahren zur Kanalschätzung in einem Kommunikationssystem, bei dem

    -   Signale (e, em) bestehend aus einem Datenteil (dt) mit Datensymbolen (d) und einer Mittambel (m) mit $L_M$ bekannten Symbolen über einen Übertragungskanal übertragen werden,
    -   empfangsseitig Kanalkoeffizienten (h) bezüglich einer Kanalimpulsantwort des Übertragungskanals geschätzt werden, wobei zur Schätzung der Kanalkoeffizienten (h)
    -   für das von der Mittambel (m) abhängige empfangene Signal (em) eine Fouriertransformation (FFT) durchgeführt wird, wobei die Fouriertransformation (FFT) zur Basis zwei mit $2^X \geq 2L$ realisiert wird und L die Länge des auszuwertenden Teils der Mittambel (m) bezeichnet, und
    -   die Fouriertransformierte (FFT(em)) mit aus den bekannten Symbolen der Mittambeln ($m^{(m)}$) abgeleiteten Schätzkoeffizienten (g''') multipliziert wird, und
    -   das Produkt aus der Fouriertransformierten (FFT(em)) und den abgeleiteten Schätzkoeffizienten (g''') durch eine inverse Fouriertransformation (IFFT) zurücktransformiert wird.

2.  Verfahren nach Anspruch 1, bei dem
    X derart gewählt wird, daß $2^{X-1}$ kleiner 2L ist.

3.  Verfahren nach einem der vorherigen Ansprüche, bei dem die Schätzung der Kanalkoeffizienten (h) für mehrere Verbindungen (V1, V2, V3) gemeinsam durchgeführt wird.

4.  Verfahren nach einem der vorherigen Ansprüche, bei dem die Kanalkoeffizienten (h) auch für nicht von Verbindungen (V1, V2, V3) genutzte Übertragungskanäle geschätzt werden.

5.  Verfahren nach einem der vorherigen Ansprüche, bei dem eine Skalierung der geschätzten Kanalkoeffizienten (h) durchgeführt wird.

6.  Verfahren nach einem der vorherigen Ansprüche, bei dem eine Zuordnung von geschätzten Kanalkoeffizienten (h) zu Verbindungen (V1, V2, V3) mit einem oder mehreren Datenkanälen (DK1, DK2, DK3) und verbindungsindividuellen Mittambeln ($m^{(m)}$) anhand einer Tabelle (T1) durchgeführt wird.

7.  Verfahren nach einem der vorherigen Ansprüche, bei dem die bei der Kanalschätzung benutzten Mittambeln ($m^{(m)}$) entsprechend der Anzahl K von Verbindungen (V1, V2, V3) angepaßt werden.

8.  Verfahren nach einem der vorherigen Ansprüche, bei dem die Anzahl $L_M$ der bekannten Symbole der Mittambel (m) derart gewählt wird, daß $L \geq W * K$ ist, wobei L die Länge des auswertbarem Teils der Mittambel (m) ist, W die Länge der zu schätzenden Kanalimpulsantwort und K die Anzahl der Verbindungen (V1, V2, V3) ist.

9. Verfahren nach einem der vorherigen Ansprüche, bei dem das Kommunikationssystem ein Mobilfunknetz ist und die Übertragungskanäle (DK1, DK2, DK3) Funkkanäle einer Funkschnittstelle beschreiben.

10. Einrichtung zur Kanalschätzung in einem Kommunikationssystem,

- wobei über Übertragungskanäle (DK1, DK2, DK3) des Kommunikationssystems Signale (e, em) bestehend aus einem Datenteil (dt) mit Datensymbolen (d) und einer Mittambel (m) mit $L_M$ bekannten Symbolen über einen Übertragungskanal übertragen werden, mit einem Kanalschätzer (KS) zum Schätzen von Kanalkoeffizienten (h) bezüglich einer Kanalimpulsantwort des Übertragungskanals, wobei zur Schätzung der Kanalkoeffizienten (h)
- für das von der Mittambel (m) abhängige empfangene Signal (em) eine Fouriertransformation (FFT) durchgeführt wird, wobei die Fouriertransformation (FFT) zur Basis zwei mit $2^X \geq 2L$ realisiert wird und L die Länge des auszuwertenden Teils der Mittambel (m) bezeichnet, und
- die Fouriertransformierte (FFT(em)) mit aus den bekannten Symbolen der Mittambeln ($m^{(m)}$) abgeleiteten Schätzkoeffizienten (g''') multipliziert wird, und
- das Produkt aus der Fouriertransformierten (FFT(em)) und den abgeleiteten Schätzkoeffizienten (g''') durch eine inverse Fouriertransformation (IFFT) zurücktransformiert wird.

**Claims**

1. Method for channel estimation in a communication system, in which

- signals (e, em) comprising a data part (dt) with data symbols (d) and a midamble (m) with $L_M$ known symbols are transmitted via a transmission channel,
- channel coefficients (h) relating to a channel pulse response of the transmission channel are estimated at the receiving end, in which case in order to estimate the channel coefficients (h)
- a Fourier transformation (FFT) is carried out for the received signal (em), which depends on the midamble (m), the Fourier transformation (FFT) being implemented on the base of two with $2^X \geq 2L$, and L denoting the length of the part of the midamble (m) to be estimated, and
- the Fourier transform (FFT (em)) is multiplied by estimation coefficients (g''') derived from the known symbols of the midambles ($m^{(m)}$), and
- the product of the Fourier transform (FFT (em)) and the derived estimation coefficients (g''') is transformed back by means of an inverse Fourier transform (IFFT).

2. Method according to Claim 1, in which X is selected such that $2^{X-1}$ is less than 2L.

3. Method according to one of the preceding claims, in which the estimation of the channel coefficients (h) is carried out jointly for a plurality of connections (V1, V2, V3).

4. Method according to one of the preceding claims, in which the channel coefficients (h) are also estimated for transmission channels not used by connections (V1, V2, V3).

5. Method according to one of the preceding claims, in which scaling of the estimated channel coefficients (h) is carried out.

6. Method according to one of the preceding claims, in which a table (T1) is used to assign estimated channel coefficients (h) to connections (V1, V2, V3) with one or more data channels (DK1, DK2, DK3) and connection-specific midambles ($m^{(m)}$).

7. Method according to one of the preceding claims, in which the midambles ($m^{(m)}$) used in the channel estimation are adapted in accordance with the number K of connections (V1, V2, V3).

8. Method according to one of the preceding claims, in which the number $L_M$ of the known symbols of the midambles (m) is selected such that $L \geq W * K$, L being the length of the available part of the midamble (m), W being the length of the channel pulse response to be estimated, and K being the number of the connections (V1, V2, V3).

9. Method according to one of the preceding claims, in which the communication system is a mobile radio network and the transmission channels (DK1, DK2, DK3) describe radio channels of an air interface.

10. Device for channel estimation in a communication system,

- signals (e, em) comprising a data part (dt) with data symbols (d) and a midamble (m) with $L_M$ known symbols being transmitted via a transmission channel via transmission channels (DK1, DK2, DK3) of the communication system,
  having a channel estimator (KS) for estimating channel coefficients (h) relating to a channel pulse response of the transmission channel, in which case in order to estimate the channel coefficients (h)
- a Fourier transformation (FFT) is carried out for the received signal (em), which depends on the midamble (m), the Fourier transformation (FFT) being implemented on the base of two with $2^X \geq 2L$, and L denoting the length of the part of the midamble (m) to be estimated, and
- the Fourier transform (FFT (em)) is multiplied by estimation coefficients (g''') derived from the known symbols of the midambles (m$^{(m)}$), and
- the product of the Fourier transform (FFT (em)) and the derived estimation coefficients (g''') is transformed back by means of an inverse Fourier transform (IFFT).

**Revendications**

1. Procédé pour l'estimation de canal dans un système de communication, dans lequel

- on transmet par l'intermédiaire d'un canal de transmission des signaux (e, em) constitués d'une partie de données (dt) avec des symboles de données (d) et d'un mi-ambule (m) avec $L_M$ symboles connus,
- côté réception, on estime des coefficients de canaux (h) par rapport à une réponse impulsionnelle du canal de transmission,
  et, pour l'estimation des coefficients de canaux (h),
- on effectue une transformation de Fourier (FFT) pour le signal (em) reçu dépendant du mi-ambule (m), la transformation de Fourier (FFT) étant réalisée pour la base deux avec $2^X \geq 2L$ et L étant la longueur de la partie à évaluer du mi-ambule (m), et
- on multiplie la transformée de Fourier (FFT(em)) par des coefficients d'estimation (g''') dérivés des symboles connus des mi-ambules (m$^{(m)}$), et
- on retransforme au moyen d'une transformation de Fourier inverse (IFFT) le produit de la transformée de Fourier (FFT(em)) par les coefficients d'estimation (g''') dérivés.

2. Procédé selon la revendication 1, dans lequel on choisit X de telle sorte que $2^{X-1}$ est inférieur à 2L.

3. Procédé selon l'une des revendications précédentes, dans lequel on effectue l'estimation des coefficients de canaux (h) en commun pour plusieurs liaisons (V1, V2, V3).

4. Procédé selon l'une des revendications précédentes, dans lequel on estime les coefficients de canaux (h) même pour des canaux de transmission non utilisés par des liaisons (V1, V2, V3).

5. Procédé selon l'une des revendications précédentes, dans lequel on effectue un classement des coefficients de canaux estimés (h).

6. Procédé selon l'une des revendications précédentes, dans lequel on effectue à l'aide d'un tableau (T1) une association de coefficients de canaux estimés (h) à des liaisons (V1, V2, V3) avec un ou plusieurs canaux de données (DK1, DK2, DK3) et mi-ambules (m$^{(m)}$) propres à chaque liaison.

7. Procédé selon l'une des revendications précédentes, dans lequel on adapte les mi-ambules (m$^{(m)}$) utilisés lors de l'estimation de canaux en fonction du nombre K de liaisons (V1, V2, V3).

8. Procédé selon l'une des revendications précédentes, dans lequel on choisit le nombre $L_M$ des symboles connus

**EP 1 004 172 B1**

du mi-ambule de telle sorte que L ≥ W * K, L étant la longueur de la partie évaluable du mi-ambule (m), W la longueur de la réponse impulsionnelle de canal à estimer et K le nombre des liaisons (V1, V2, V3).

9.  Procédé selon l'une des revendications précédentes, dans lequel le système de communication est un réseau de radiocommunication mobile et les canaux de transmission (DK1, DK2, DK3) décrivent des canaux radio d'une interface radio.

10. Dispositif pour l'estimation de canaux dans un système de communication,

   -   sachant que, par l'intermédiaire de canaux de transmission (DK1, DK2, DK3) du système de communication, des signaux (e, em) constitués d'une partie de données (dt) avec des symboles de données (d) et d'un mi-ambule (m) avec $L_M$ symboles connus sont transmis par l'intermédiaire d'un canal de transmission, lequel dispositif comporte un estimateur de canal (KS) pour estimer des coefficients de canaux (h) par rapport à une réponse impulsionnelle du canal de transmission et est tel que, pour l'estimation des coefficients de canaux (h),
   -   une transformation de Fourier (FFT) est effectuée pour le signal (em) reçu dépendant du mi-ambule (m), la transformation de Fourier (FFT) étant réalisée pour la base deux avec $2^X ≥ 2L$ et L étant la longueur de la partie à évaluer du mi-ambule (m), et
   -   la transformée de Fourier (FFT(em)) est multipliée par des coefficients d'estimation (g''') dérivés des symboles connus des mi-ambules ($m^{(m)}$), et
   -   le produit de la transformée de Fourier (FFT(em)) par les coefficients d'estimation (g''') dérivés est retransformé au moyen d'une transformation de Fourier inverse (IFFT).

**11**

# Fig.1

## Fig.2

ts   ts1   ts2   ts3   ts4   ts5   ts6   ts7   ts8   t (TDMA)

## Fig.3

# Fig 4

V1

Q1 — Datenquelle → $d_{Q1}^{(1)}$ → S2 [Kanal-codierer → Inter-leaver] → S3 [Modu-lator → Sprei-zer] → S4

Q2 — Datenquelle → S1 Quellen-codierer → $d_{S1}^{(1)}$

$d_{Q2}^{(K)}$

CDMA-Codes

$d^{(1)}$

...

Q1 — Datenquelle → $d_{Q1}^{(K)}$ → S2 [Kanal-codierer → Inter-leaver] → S3 [Modu-lator → Sprei-zer]

Q2 — Datenquelle → S1 Quellen-codierer → $d_{S1}^{(K)}$

CDMA-Codes

$d^{(K)}$

$\Sigma$

V2, V3 $d_{Q2}^{(K)}$

S5 [Burst-bildner] ← m ← Mittam-belcode

→ S6 Chipim-pulsfilter → s → S7 D/A-Wandler → S8 Sende-filter → S9 HF-Teil

TCH SACCH FACCH — tx

EP 1 004 172 B1

# Fig 5

TCH
SACCH
rx FACCH

E1

**HF-Teil** → **Empfangs-filter** (E2) → **A/D-Wandler** (E3) → **digitaler Tiefpaß** | **2:1 De-zimierer** (E4) → e

Mittambelcode (E5) → Kanal-schätzer

CDMA-Codes (E6) → b-Generator

em → Kanal-schätzer

b-Generator → $A^{*T}A$ Generator (E8) → Cholesky-Zerleger (E9)

h → Mittambel-interferenz. eliminierer (E7)

Mittambelcode

b → Matched Filter (E10)

e1/2 → Matched Filter

H, s

Gleichungs-systemlöser 1 (E11)

Gleichungs-systemlöser 2 (E12) ← z1/2

...

E13

Demodu-lator → Deinter-leaver → Kanalde-codierer (E14) → Quellende-codierer → Daten-senke

D1, D2

Demodu-lator → Deinter-leaver → Kanalde-codierer → Quellende-codierer → Daten-senke

D1, D2

$e_{E13}^{(k)}$

V1

→ V2, V3

15

Fig 6

DSP

tx →

| DSP1 | SE |

| DSP2 (KS) | DSP3 |

→ d

SP
( g''', T1 )

Fig 7

KS

$g = DFT ( m )$

$g^{-1}$

$g' = IDFT(g^{-1})$

$g'' = (g',g',000..0)$

$g''' = FFT (g'')$

em → $h = IFFT(FFT(em) \cdot g''')$ | Skalierung → h